# EUROPEAN PATENT APPLICATION

(11) **EP 4 663 600 A1**
(43) Date of publication of application: **17.12.2025**
(21) Application number: 24770748.2
(22) Date of filing: 08.03.2024
(51) Int. Cl.: C01B 3/00, B01J 4/00, B01J 7/00, C01B 3/26, F02M 21/02, F17C 9/04

(54) **HYDROGEN SUPPLY SYSTEM AND METHOD FOR OPERATING SAME**

(30) Priority: 16.03.2023 JP 2023041885; 16.03.2023 JP 2023041886
(71) Applicant: Chiyoda Corporation, Kanagawa 220-8765 (JP)
(72) Inventor: KAWAKAMI Madoka, Yokohama-shi, Kanagawa 220-8765 (JP); KAWAI Hironori, Yokohama-shi, Kanagawa 220-8765 (JP); OKADA Masataka, Yokohama-shi, Kanagawa 220-8765 (JP); NIHIRA Masayuki, Yokohama-shi, Kanagawa 220-8765 (JP); KOHIYAMA Terumi, Yokohama-shi, Kanagawa 220-8765 (JP)
(74) Representative: Ipsilon Luxembourg
(86) International application number: PCT/JP2024/008962
(87) International publication number: WO 2024/190642

(57) **Abstract**

[Problem] To provide a hydrogen generation system and a method for operating the same which enable a quick change in an amount of hydrogen gas to be supplied.

[Solution] A hydrogen supply system (1) includes a vaporizer (3) for vaporizing a hydrogen carrier in liquid form; a dehydrogenation reactor (4) for generating hydrogen from the vaporized hydrogen carrier provided from the vaporizer through a dehydrogenation reaction; and a control device (30) for controlling a flow rate of the vaporized hydrogen carrier flowing through an outlet of the vaporizer. The control device may adjust an amount of heat for heating the hydrogen carrier to thereby regulate the flow rate of the vaporized hydrogen carrier flowing through the outlet of the vaporizer. The hydrogen supply system (1) further comprises: a main passage (L6) connected to an outlet of the dehydrogenation reactor and passing through a first vaporizer; a bypass passage (L7) connected to the main passage and bypassing the first vaporizer; and a first flow control valve (V6) provided in at least one of the main passage and the bypass passage.

## Description

### TECHNICAL FIELD

The present invention relates to a hydrogen supply system and a method for operating the hydrogen supply system.

### BACKGROUND ART

Patent Document 1 discloses a hydrogen supply system for producing hydrogen gas from organic hydride, as a raw material. The hydrogen supply system includes a vaporizer for vaporizing the organic hydride, a dehydrogenation reactor for causing a dehydrogenation reaction of the vaporized organic hydride, and a gas-liquid separator for separating hydrogen gas from organic matter generated by the dehydrogenation reaction.

### PRIOR ART DOCUMENT (S)

### PATENT DOCUMENT(S)

Patent Document 1: JP7198048B

### SUMMARY OF THE INVENTION

### TASK TO BE ACCOMPLISHED BY THE INVENTION

When a hydrogen utilizer (a device that uses hydrogen) such as a gas turbine generator is connected to the hydrogen supply system and uses hydrogen generated by the system, the hydrogen supply system needs to be configured to vary the amount of hydrogen gas generated according to the hydrogen gas flow rate required by the hydrogen utilizer. However, since the hydrogen supply system of the prior art involves a delay in vaporizing the organic hydride, which is the raw material, the system is unable to quickly change the amount of hydrogen gas to be supplied according to changes in the supplied amount of the raw material.

The present invention has been made in view of this problem of the prior art, and a primary object of the present invention is to provide a hydrogen generation system and a method for operating the same which enable a quick change in an amount of hydrogen gas to be supplied.

### MEANS TO ACCOMPLISH THE TASK

An aspect of the present invention provides a hydrogen supply system (1) comprising: a vaporizer (3) for vaporizing a hydrogen carrier in liquid form; a dehydrogenation reactor (4) for generating hydrogen from the vaporized hydrogen carrier provided from the vaporizer through a dehydrogenation reaction; and a control device (30) for controlling a flow rate of the vaporized hydrogen carrier flowing through an outlet of the vaporizer.

This configuration enables quick regulation of the flow rate of vaporized hydrogen carrier provided to the dehydrogenation reactor by controlling the flow rate of the vaporized hydrogen carrier flowing through the outlet of the vaporizer. This enables a quick change in the amount of hydrogen gas generated in the dehydrogenation reactor, which means that this configuration provides a hydrogen generation system which enables a quick change in the amount of hydrogen gas to be supplied.

The above hydrogen supply system may be further configured such that the control device adjusts an amount of heat for heating the hydrogen carrier to thereby regulate the flow rate of the vaporized hydrogen carrier flowing through the outlet of the vaporizer.

This configuration enables quick regulation of the flow rate of the vaporized hydrogen carrier flowing through the outlet of the vaporizer by adjusting the amount of heat for heating the hydrogen carrier in the vaporizer.

The above hydrogen supply system may be further configured such that the vaporizer comprises a first vaporizer (3A) and a second vaporizer (3B) having their heat sources that are different from each other.

In this configuration, the hydrogen carrier is vaporized using the first vaporizer and the second vaporizer with their heat sources that are different from each other. Thus, even when that only an insufficient amount of heat is provided from one of the first vaporizer and the second vaporizer, the other of the first vaporizer and the second vaporizer can be used to quickly vaporize the hydrogen carrier.

The above hydrogen supply system may be further configured such that the system comprises a main passage (L6) connected to an outlet of the dehydrogenation reactor and passing through the first vaporizer; a bypass passage (L7) connected to the main passage and bypassing the first vaporizer; and a first flow control valve (V6) provided in at least one of the main passage and the bypass passage, wherein the first vaporizer uses a fluid flowing out from the outlet of the dehydrogenation reactor as a heat source.

This configuration enables control of the amount of heat for heating the hydrogen carrier in the first vaporizer by controlling the flow rate of the vaporized hydrogen carrier flowing through the bypass passage.

The above hydrogen supply system may be further configured such that the second vaporizer is supplied with a heat source for heating the dehydrogenation reactor.

This configuration enables use of a heat source for heating the dehydrogenation reactor to heat the second vaporizer.

The above hydrogen supply system may be further configured such that the system comprises a second flow control valve (V1) for controlling the flow rate of the hydrogen carrier in liquid form supplied to the vaporizer; and a level sensor (LV1) for detecting a liquid level of the hydrogen carrier in the vaporizer, and wherein the second flow control valve is controlled such that the liquid level of the hydrogen carrier in the vaporizer is maintained at a constant level.

In this configuration, the liquid level of the hydrogen carrier in the vaporizer is maintained at a constant level, which enables control of the amount of vaporized hydrogen carrier according to the amount of heat for heating the hydrogen carrier.

Another aspect of the present invention provides a method for operating a hydrogen supply system (1), wherein the hydrogen supply system comprises: a vaporizer (3) for vaporizing a hydrogen carrier in liquid form; and a dehydrogenation reactor (4) for generating hydrogen from the vaporized hydrogen carrier provided from the vaporizer through a dehydrogenation reaction, wherein the method includes regulating a flow rate of the vaporized hydrogen carrier flowing through an outlet of the vaporizer to regulate a flow rate of hydrogen flowing through an outlet of the dehydrogenation reactor.

This configuration enables quick regulation of the flow rate of vaporized hydrogen carrier provided to the dehydrogenation reactor by controlling the flow rate of the vaporized hydrogen carrier flowing through the outlet of the vaporizer. This enables a quick change in the amount of hydrogen gas generated in the dehydrogenation reactor, which means that this configuration provides a hydrogen generation system which enables a quick change in the amount of hydrogen gas to be supplied.

Yet another aspect of the present invention provides a hydrogen supply system (1) comprising: a dehydrogenation reactor (4) for receiving a hydrogen carrier and generating hydrogen from the hydrogen carrier through a dehydrogenation reaction; a main passage (L6)connected to an outlet of the dehydrogenation reactor; a gas-liquid separator (5) for separating hydrogen gas from a fluid flowing through the main passage; and a hydrogen gas holder (6) connected downstream of the gas-liquid separator in the main passage via a first connecting passage (L8) branching from the main passage.

In this configuration, a hydrogen gas holder is provided downstream of the gas-liquid separator in the main passage. Thus, this enables a quick change in an amount of hydrogen gas to be supplied according to changes in the required hydrogen gas flow rate. In addition, the hydrogen gas holder is provided in a passage branching from the main passage, which enables the hydrogen gas holder to be made small.

The above hydrogen supply system may be further configured such that the system comprises: a compressor (21B, 21C) provided in a section between the gas-liquid separator in the main passage and the first connecting passage and configured to compress the hydrogen gas; and a second connecting passage (L9) connecting the hydrogen gas holder to a section between the compressor and the gas-liquid separator in the main passage.

In this configuration, the hydrogen gas holder is arranged in parallel with the compressor, which enables the hydrogen gas holder to be made small.

The above hydrogen supply system may be further configured such that the system comprises: a main flow control valve (V5) provided at a downstream end of the main passage and connected to a hydrogen utilizer (20) that utilizes hydrogen; an inflow control valve (V8) provided in the first connecting passage and configured to control a flow rate of the hydrogen gas flowing from the main passage to the hydrogen gas holder; and a return flow control valve (V9) provided in the second connecting passage and configured to control the flow rate of the hydrogen gas flowing from the hydrogen gas holder to the main passage.

This configuration enables adjustment of the amount of hydrogen gas in the hydrogen gas holder.

The above hydrogen supply system may be further configured such that the system comprises: a vaporizer (3) for vaporizing the hydrogen carrier in liquid form and providing the vaporized hydrogen carrier to the dehydrogenation reactor; and a control device (30) for controlling at least the vaporizer and the main flow control valve, wherein the control device is configured to: control a valve opening of the main flow control valve based on a required hydrogen gas flow rate for the hydrogen utilizer, and control the vaporizer to regulate the flow rate of the vaporized hydrogen carrier flowing through an outlet of the vaporizer based on the required hydrogen gas flow rate and a pressure in the hydrogen gas holder.

This configuration enables control of the flow rate of the hydrogen carrier gas provided from the vaporizer to the dehydrogenation reactor taking into account the pressure in the hydrogen gas holder, which enables an appropriate change in the amount of hydrogen gas to be supplied according to the required hydrogen gas flow rate.

The above hydrogen supply system may be further configured such that the control device is configured to control the vaporizer such that the flow rate of the vaporized hydrogen carrier flowing through the outlet of the vaporizer increases with an increase in the required hydrogen gas flow rate, and such that the flow rate of the hydrogen carrier decreases with an increase in the pressure in the hydrogen gas holde

In this configuration, the flow rate of the vaporized hydrogen carrier provided from the vaporizer to the dehydrogenation reactor decreases with an increase in the pressure in the hydrogen gas holder, which enables an appropriate change in the amount of hydrogen gas to be supplied according to the required hydrogen gas flow rate.

The above hydrogen supply system may be further configured such that the control device is configured to: calculate a target vaporized raw material flow rate by multiplying the required hydrogen gas flow rate by a coefficient; control the vaporizer such that the flow rate of the vaporized hydrogen carrier flowing through the outlet of the vaporizer becomes the target vaporized raw material flow rate; and change the coefficient based on the pressure in the hydrogen gas holder.

This configuration enables control of the flow rate of the hydrogen carrier gas provided from the vaporizer to the dehydrogenation reactor taking into account the pressure in the hydrogen gas holder, which enables an appropriate change in the amount of hydrogen gas to be supplied according to the required hydrogen gas flow rate.

The above hydrogen supply system may be further configured such that the control device is configured to: open the inflow control valve when a downstream pressure, the downstream pressure being a pressure in a section between the compressor and the main flow control valve in the main passage, is equal to or greater than a first threshold value; close the inflow control valve when the downstream pressure is less than the first threshold value; open the return flow control valve when an upstream pressure, the upstream pressure being a pressure in a section between the gas-liquid separator and the compressor in the main passage, is less than a second threshold value; close the return flow control valve when the upstream pressure is equal to or greater than the second threshold value; calculate a target vaporized raw material flow rate by multiplying the required hydrogen gas flow rate by a coefficient; control the vaporizer such that the flow rate of the vaporized hydrogen carrier flowing through the outlet of the vaporizer becomes the target vaporized raw material flow rate; decrease the coefficient with a decrease in a reference value, the reference value being obtained by subtracting a target pressure in the hydrogen gas holder from the pressure in the hydrogen gas holder; and decrease the target pressure with an increase in the required hydrogen gas flow rate.

In this configuration, since the higher the pressure in the hydrogen gas holder relative to a target pressure is, the lower the target vaporized raw material flow rate becomes, the return flow control valve opens in order to maintain the upstream pressure, causing the pressure in the hydrogen gas holder to become close to the target pressure. In addition, since the lower the pressure in the hydrogen gas holder relative to the target pressure is, the greater the target vaporized raw material flow rate becomes, the inflow control valve opens in order to maintain the downstream pressure, causing the pressure in the hydrogen gas holder to become close to the target pressure. A rapid increase in the required hydrogen gas flow rate causes the target pressure to decrease with an increase in the required hydrogen gas flow rate, causing the pressure in the hydrogen gas holder to become close to the target pressure, which prevents the target vaporized raw material flow rate from increasing rapidly. As a result, the flow rate at the outlet of the vaporizer (the target vaporized raw material flow rate) is prevented from overshooting.

The above hydrogen supply system may be further configured such that the system comprises: a flow sensor (F2) for measuring the flow rate of the hydrogen gas flowing at the downstream end of the main passage, and wherein the control device controls the main flow control valve based on the required hydrogen gas flow rate and the measured flow rate of the hydrogen gas obtained by the flow sensor.

This configuration enables adjustment of the flow rate of the hydrogen gas provided to the hydrogen utilizer to the required hydrogen gas flow rate.

Yet another aspect of the present invention provides a method for operating a hydrogen supply system (1), wherein the hydrogen supply system comprises: a vaporizer (3) for vaporizing a hydrogen carrier in liquid form; a dehydrogenation reactor (4) for generating hydrogen from the vaporized hydrogen carrier provided from the vaporizer through a dehydrogenation reaction; a main passage (L6) connected to an outlet of the dehydrogenation reactor; a gas-liquid separator (5) provided downstream of the vaporizer in the main passage and configured to separate hydrogen gas from a fluid flowing through the main passage; a compressor (21B, 21C) provided downstream of the gas-liquid separator in the main passage and configured to compress the hydrogen gas; a main flow control valve (V5) provided at a downstream end of the main passage and connected to a hydrogen utilizer (20) that utilizes hydrogen; a first connecting passage (L8) connected to a section between the compressor and the main flow control valve in the main passage; a second connecting passage (L9) connected to a section between the gas-liquid separator and the compressor in the main passage; a hydrogen gas holder (6) connected to the first connecting passage and the second connecting passage; an inflow control valve (V8) provided in the first connecting passage and configured to control a flow rate of the hydrogen gas flowing from the main passage to the hydrogen gas holder; and a return flow control valve (V9) provided in the second connecting passage and configured to control the flow rate of the hydrogen gas flowing from the hydrogen gas holder to the main passage, wherein the method comprising: controlling a valve opening of the main flow control valve based on a required hydrogen gas flow rate for the hydrogen utilizer; and controlling the vaporizer to regulate the flow rate of the vaporized hydrogen carrier flowing through an outlet of the vaporizer based on the required hydrogen gas flow rate and a pressure in the hydrogen gas holder.

This configuration enables control of the flow rate of the hydrogen carrier gas provided from the vaporizer to the dehydrogenation reactor taking into account the pressure in the hydrogen gas holder, which enables an appropriate change in the amount of hydrogen gas to be supplied according to the required hydrogen gas flow rate.

### EFFECT OF THE INVENTION

According to the present invention, provided are a hydrogen generation system and a method for operating the same which enable a quick change in the amount of hydrogen gas to be supplied.

### BRIEF DESCRIPTION OF THE DRAWINGS

[Figure 1] Figure 1 is an explanatory diagram showing a hydrogen supply system according to a first embodiment of the present invention;
[Figure 2] Figure 2 is a flowchart showing a control procedure executed by a control device;
[Figure 3] Figure 3 is a graph showing a mass flow rate of hydrogen carrier at the outlet of the vaporizer and a mass flow rate of hydrogen gas at the downstream end of the main passage, relative to the required hydrogen gas flow rate;
[Figure 4] Figure 4 is a graph showing a pressure of hydrogen gas at the downstream end of the main passage and its target value, relative to the required hydrogen gas flow rate;
[Figure 5] Figure 5 is an explanatory diagram showing a hydrogen supply system according to a variant of the first embodiment of the present invention; and
[Figure 6] Figure 6 is an explanatory diagram showing a hydrogen supply system according to a second embodiment of the present invention.

### DESCRIPTION OF THE PREFERRED EMBODIMENT(S)

Embodiments of a hydrogen supply system and a method for operating the same according to the present invention will be described. The hydrogen supply system is configured to generate hydrogen from a hydrogen carrier through a dehydrogenation reaction, and supply the generated hydrogen to a hydrogen utilizer. Examples of the hydrogen utilizer include hydrogen gas turbines, fuel cells, and hydrogen internal combustion engines.

The hydrogen carrier is a compound that releases hydrogen molecules through a dehydrogenation reaction and is also known as hydride. Examples of the hydrogen carriers may include organic hydrides, ammonia, and formic acid. The organic hydrides include hydrogenated aromatic compounds. The hydrogenated aromatic compounds may include hydrogenated compounds of monocyclic aromatic compounds, hydrogenated compounds of bicyclic aromatic compounds, and hydrogenated compounds of compounds with three or more aromatic rings. More specifically, hydrogenated aromatic compounds are preferably selected from one or more of the group consisting of methylcyclohexane (MCH), cyclohexane, dimethylcyclohexane, tetralin, decalin, methyl decalin, biphenyl, diphenylmethyl, dibenzotriol, and tetradeca-hydroanthracene. Dehydrogenated hydrogen carriers can be restored to their original hydrogen carriers containing hydrogen through hydrogenation reactions. For example, dehydrogenation reaction of methylcyclohexane produces hydrogen and toluene, and hydrogenation reaction of toluene produces methylcyclohexane.

### <First Embodiment>

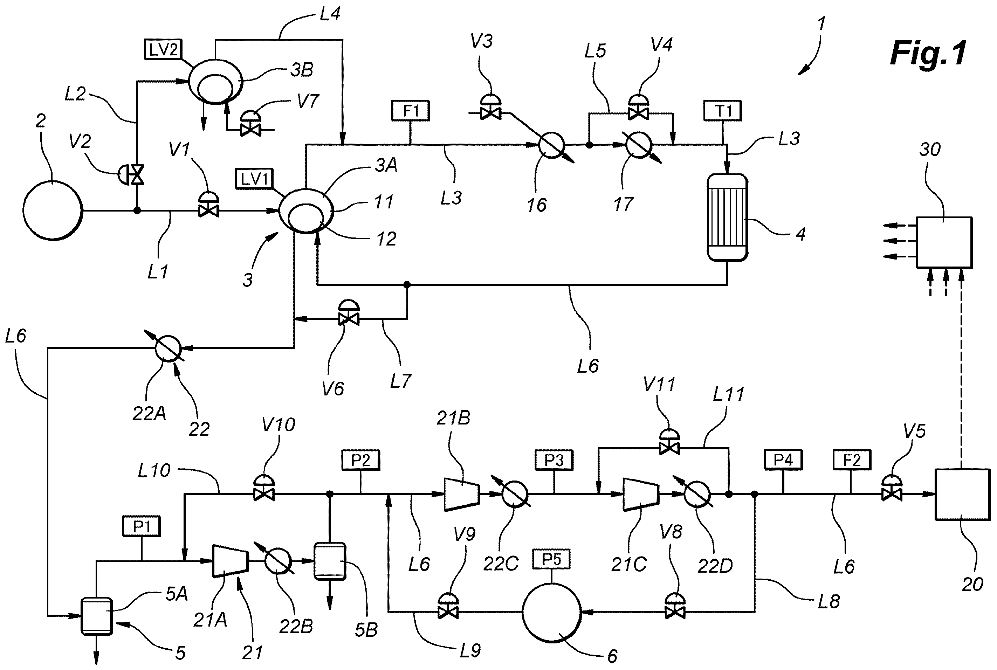

As shown in Figure 1, a hydrogen supply system 1 according to a first embodiment of the present invention includes a raw material container 2, vaporizers 3, a dehydrogenation reactor 4, gas-liquid separators 5, and a hydrogen gas holder 6. All these elements are connected to each other by passages. Each of the passages is preferably formed by a pipe. The raw material container 2 stores a hydrogen carrier as a raw material in liquid form. The raw material container 2 may be a tank or a vessel.

The vaporizers 3 vaporize a hydrogen carrier in liquid form. The vaporizers 3 include a first vaporizer 3A and a second vaporizer 3B. The first vaporizer 3A and the second vaporizer 3B are arranged in parallel with each other. Each of the first vaporizer 3A and the second vaporizer 3B includes a drum 11 into which liquid hydrogen carrier is supplied, and a heater 12 that provides a heat source (heat medium) for heating the drum 11. Each drum 11 has a drum inlet through which liquid hydrogen carrier flows in, and a drum outlet through which gaseous hydrogen carrier, which is vaporized within the drum 11, flows out. The heater 12 may be a tube passing through the drum 11 or a jacket provided around drum 11.

The raw material container 2 is connected to the drum inlet of the first vaporizer 3A via a passage L1 and to the drum inlet of the second vaporizer 3B via a passage L2. A flow control valve V1 and a flow control valve V2 are provided in the passage L1 and the passage L2, respectively.

The drum outlet of the first vaporizer 3A is connected to an inlet of the dehydrogenation reactor 4 by a passage L3. The drum outlet of the second vaporizer 3B is connected to a passage L3 via a passage L4. The passage L3 has, from the side of the first vaporizer 3A, a part connecting to the passage L4, a first heating device 16, and a second heating device 17 in order.

The system includes a first heating device 16 and a second heating device 17 which heat the hydrogen carrier gas flowing through the passage L3. Each of the first heating device 16 and the second heating device 17 may be a heat exchanger to which a high-temperature heat transfer fluid is supplied or a boiler configured to be heated by combustion heat of a fuel. Provided in the passage L3 is a bypass passage L5 that bypasses at least one of the first heating device 16 and the second heating device 17. In the present embodiment, the first heating device 16 is provided with a flow control valve V3 that controls the flow rate of the heat transfer medium supplied to the first heating device 16. The second heating device 17 is connected in parallel with the bypass passage L5. In some cases, the second heating device 17 may be supplied with waste heat from another heating furnace. The other heating furnace may, for example, be a hot oil heating furnace used to heat hot oil for heating the dehydrogenation reactor 4. A flow control valve V4 is provided in the bypass passage L5 to regulate the flow rate of the hydrogen carrier gas flowing through the bypass passage L5.

The dehydrogenation reactor 4 is a tubular reactor which can operate continuously, and is filled with a dehydrogenation catalyst. The dehydrogenation catalyst is preferably a platinum-carrying alumina catalyst, in which an alumina carrier carries platinum, for example. The alumina carrier may be, for example, one having a surface area of 150 m²/g or more, a pore volume of 0.40 cm³/g or more, and an average pore diameter of 40 angstrom or more and 300 angstrom or less, where a proportion of pores with an average pore diameter of ±30 angstrom or less to the total pore volume is 60% or more. The platinum content is preferably 0.05 wt% or more and 5.0 wt% or less as platinum element. The dehydrogenation catalyst may further contain an alkali metal such as sodium or potassium.

The inlet of the dehydrogenation reactor 4 is connected to the passage L3, so that the vaporized and heated hydrogen carrier is supplied thereto. The dehydrogenation reactor 4 generates hydrogen through the dehydrogenation reaction of the hydrogen carrier. The hydrogen carrier is dehydrogenated within the dehydrogenation reactor 4 through the dehydrogenation reaction catalyzed by the dehydrogenation catalyst, so that the dehydrogenation reactor 4 releases hydrogen gas. When the hydrogen carrier is methylcyclohexane, the dehydrogenation reaction produces toluene and hydrogen. As the dehydrogenation reaction is an endothermic reaction, the reaction is promoted at high temperatures. A heat transfer medium is supplied to the dehydrogenation reactor 4, in which heat is exchanged between the hydrogen carrier and the heat transfer medium, thereby heating the hydrogen carrier. The heat transfer medium may be, for example, hot oil. The temperature inside the dehydrogenation reactor 4 is preferably maintained at 250°C or higher and 350°C or lower.

A mixed fluid flows out from an outlet of the dehydrogenation reactor 4, the mixed fluid containing unreacted hydrogen carrier gas, hydrogen gas, and dehydrogenated hydrogen carrier gas. The outlet of the dehydrogenation reactor 4 is connected to a main passage L6. The main passage L6 has a downstream end which is connected to a hydrogen utilizer 20, which utilizes hydrogen.

Provided in the main passage L6 are the first vaporizer 3A, the gas-liquid separators 5, compressors 21, coolers 22, and a main flow control valve V5. Each of the gas-liquid separators 5 separates hydrogen gas from the mixed fluid flowing through the main passage L6. The gas-liquid separators 5 include a first gas-liquid separator 5A and a second gas-liquid separator 5B. Each of the compressors 21 compresses the mixed fluid and hydrogen gas flowing through the main passage L6. The compressors 21 include a first compressor 21A, a second compressor 21B, and a third compressor 21C. The coolers 22 cool the mixed fluid and hydrogen gas flowing through the main passage L6. The coolers 22 include a first cooler 22A, a second cooler 22B, a third cooler 22C, and a fourth cooler 22D. The first vaporizer 3A, the first cooler 22A, the first gas-liquid separator 5A, the first compressor 21A, the second cooler 22B, the second gas-liquid separator 5B, the second compressor 21B, the third cooler 22C, the third compressor 21C, the fourth cooler 22D, and the main flow control valve V5 are arranged in the order from the upstream side to the downstream side in the main passage L6.

The main passage L6 passes through the first vaporizer 3A. As a result, the mixed fluid flowing out from the outlet of the dehydrogenation reactor 4 passes through the heater 12 of the first vaporizer 3A to heat the first vaporizer 3A. In other words, the first vaporizer 3A uses the fluid flowing out from the outlet of the dehydrogenation reactor 4 as a heat source. The temperature of the mixed fluid supplied to the heater 12 of the first vaporizer 3A is preferably in the range from 200°C to 350°C. The mixed fluid is cooled while supplying heat to the first vaporizer 3A.

The main passage L6 is connected to a bypass passage L7, which bypasses the first vaporizer 3A. An upstream end of the bypass passage L7 is connected to a section between the dehydrogenation reactor 4 and the first vaporizer 3A in the main passage L6, and a downstream end of the bypass passage L7 is connected to a section between the first vaporizer 3A and the first cooler 22A in the main passage L6. A bypass flow control valve(s) V6 is provided in at least one of the main passage L6 and the bypass passage L7. The bypass flow control valve V6 regulates the flow rate of the mixed fluid supplied to the first vaporizer 3A. The flow rate of the high-temperature mixed fluid flowing through the bypass passage L7 can be regulated by adjusting an amount of heat for heating the hydrogen carrier in the first vaporizer 3A. The bypass flow control valve V6 is one of the elements that constitute the first vaporizer 3A. In the present embodiment, the bypass flow control valve V6 is provided in the bypass passage L7. In other embodiments, the bypass flow control valve V6 may be a three-way valve provided at a connection between the main passage L6 and the bypass passage L7.

The first vaporizer 3A and the second vaporizer 3B have their heat sources that are different from each other. In the present embodiment, the second vaporizer 3B is supplied with hot oil, which is a heat source for heating the dehydrogenation reactor 4. This configuration allows the heat source for heating the dehydrogenation reactor 4 to be also used for heating the second vaporizer 3B. The second vaporizer 3B is equipped with a flow control valve V7 to control the flow rate of hot oil.

The first cooler 22A cools the mixed fluid that has passed through the first vaporizer 3A to below the dew point of the hydrogen carrier and below the dew point of the dehydrogenated hydrogen carrier. As a result, the hydrogen carrier and the dehydrogenated hydrogen carrier in the mixed fluid condense. This also results in the mixed fluid containing the hydrogen carrier in liquid form and the dehydrogenated hydrogen carrier, and the hydrogen gas. The first cooler 22A may be a heat exchanger using water as a coolant.

The first gas-liquid separator 5A separates the mixed fluid cooled in the first cooler 22A into the hydrogen gas, the liquid hydrogen carrier, and the dehydrogenated hydrogen carrier. The first gas-liquid separator 5A may be a knockout drum. The hydrogen gas flows from a gas outlet of the first gas-liquid separator 5A to the downstream side of the main passage L6. The liquid hydrogen carrier and dehydrogenated hydrogen carrier are recovered from a liquid outlet of the first gas-liquid separator 5A.

The hydrogen gas discharged from the gas outlet of the first gas-liquid separator 5A is compressed in the first compressor 21A and cooled in the second cooler 22B. This causes the hydrogen carrier and dehydrogenated hydrogen carrier remaining in the hydrogen gas to condense. The hydrogen gas passing through the second cooler 22B is separated in the second gas-liquid separator 5B, where the condensed hydrogen carrier and dehydrogenated hydrogen carrier are separated. The second gas-liquid separator 5B may have the same configuration as the first gas-liquid separator 5A. The hydrogen gas flows downstream of the main passage L6 from a gas outlet of the second gas-liquid separator 5B. The liquid hydrogen carrier and dehydrogenated hydrogen carrier are recovered from a liquid outlet of the second gas-liquid separator 5B.

The hydrogen gas that has passed through the second gas-liquid separator 5B is compressed in the second compressor 21B and then cooled in the third cooler 22C. The third cooler 22C cools the hydrogen gas, thereby reducing its volume, which makes subsequent compression easier. The hydrogen gas that has passed through the third cooler 22C is compressed in the third compressor 21C and then cooled in the fourth cooler 22D.

The main flow control valve V5 is provided at the downstream end of the main passage L6 and regulates the flow rate of hydrogen gas supplied to the hydrogen utilizer 20.

The hydrogen gas holder 6 is connected downstream of the gas-liquid separator 5 in the main passage L6 via a first connecting passage L8 branching from the main passage L6. The hydrogen gas holder 6 is a pressure vessel capable of receiving pressurized hydrogen gas. In the present embodiment, the first connecting passage L8 is connected to a section between the fourth cooler 22D and the main flow control valve V5 in the main passage L6. As a result, the first compressor 21A, the second compressor 21B, and the third compressor 21C are disposed in the main passage L 6 between the first gas-liquid separator 5A and a part connecting to the first connecting passage L8.

The hydrogen gas holder 6 is connected to a section in the main passage L6 between the first gas-liquid separator 5A and the second compressor 21B via a second connecting passage L9. In the present embodiment, the second connecting passage L9 is connected to the section in the main passage L6 between the second gas-liquid separator 5B and the second compressor 21B.

The first connecting passage L8 is provided with an inflow control valve V8 that controls the flow rate of hydrogen gas flowing from the main passage L6 to the hydrogen gas holder 6. The second connecting passage L9 is provided with a return flow control valve V9 that controls the flow rate of hydrogen gas flowing from the hydrogen gas holder 6 to the main passage L6.

A return passage L10 connects the section between the second gas-liquid separator 5B and the second compressor 21B in the main passage L6, to a section between the first gas-liquid separator 5A and the first compressor 21A in the main passage L6. The return passage L10 is provided with a flow control valve V10.

A return passage L11 connects a section between the fourth cooler 22D and the first connecting passage L8 in the main passage L6, and a section between the third cooler 22C and the third compressor 21C in the main passage L6. The return passage L11 is provided with a flow control valve V11.

A flow sensor F1 is provided in a section of the passage L3 between the part connecting to the passage L4 and the first heating device 16, to measure the flow rate of a fluid flowing through the section. A flow sensor F2 is provided in a section of the main passage L6 between the part connecting to the first connecting passage L8 and the main flow control valve V5 in the main passage L6, to measure the flow rate of the fluid flowing through the section. A temperature sensor T1 is provided in a section of the passage L3 between the second heating device 17 and the dehydrogenation reactor 4, to measure the temperature of the fluid flowing through the section, i.e., the temperature of the hydrogen carrier at the inlet of the dehydrogenation reactor 4.

A pressure sensor P1 is provided in a section between the first gas-liquid separator 5A and the first compressor 21A in the main passage L6 to measure the pressure in the section. A pressure sensor P2 is provided in a section between the second gas-liquid separator 5B and the second compressor 21B in the main passage L6 to measure the pressure in the section. A pressure sensor P3 is provided in a section between the third cooler 22C and the third compressor 21C in the main passage L6 to measure the pressure in the section. A pressure sensor P4 is provided in a section between the part connecting to the first connecting passage L8 and the main flow control valve V5 in the main passage L6 to measure the pressure in the section. A pressure sensor P5 is provided in the hydrogen gas holder 6 to measure the pressure in the hydrogen gas holder 6.

A level sensor LV1 is provided in the drum 11 of the first vaporizer 3A to measure the liquid level of the liquid hydrogen carrier therein. A level sensor LV2 is provided in the drum 11 of the second vaporizer 3B to measure the liquid level of the liquid hydrogen carrier therein.

The hydrogen supply system 1 includes a control device 30 that controls at least the vaporizers 3 and the main flow control valve V5. The control device 30 is a computer that includes a processor, a memory, and a storage for storing programs, and executes various applications by executing the stored programs. The control device 30 may be configured as a single unit or as multiple units separated from each other. In the present embodiment, the control device 30 is connected to each of the valves V1 to V11 and controls each of the valves V1 to V11. In addition, the control device 30 is connected to the flow sensors F1 and F2, the temperature sensor T1, the pressure sensors P1 to P5, and the level sensors LV1 and LV2, and receives signals from these sensors.

The control device 30 controls the flow control valves V3 and V4 based on the temperature of the hydrogen carrier measured by the temperature sensor T1 at the inlet of the dehydrogenation reactor 4. The control device 30 may, for example, control the flow control valve V4 in a preferential manner and control the flow control valve V3 in a secondary manner. The control device 30 normally keeps the flow control valve V3 fully closed to stop the first heating device 16, and reduces the valve opening of the flow control valve V4 with a decrease in the temperature acquired by the temperature sensor T1. This increases the flow rate of the hydrogen carrier passing through the second heating device 17, thereby raising the temperature of the hydrogen carrier. Preferably, the control device 30 opens the flow control valve V3 after the flow control valve V4 has been fully closed. This increases the flow rate of a heat transfer medium supplied to the first heating device 16, thereby raising the temperature of the hydrogen carrier in the first heating device 16.

The control device 30 controls the flow control valve V10 based on the pressure acquired by the pressure sensor P1, i.e., the pressure of hydrogen gas in the section between the first gas-liquid separator 5A and the first compressor 21A. The control device 30 controls the flow control valve V10 such that the pressure acquired by the pressure sensor P1 becomes a target value PT1. When the flow control valve V10 opens, the hydrogen gas compressed by the first compressor 21A returns to upstream of the first compressor 21A via the return passage L10, raising the pressure of the hydrogen gas between the first gas-liquid separator 5A and the first compressor 21A. Preferably, the control device 30 increases the valve opening of the flow control valve V10 with a decrease in the pressure acquired by the pressure sensor P1. Preferably, the control device 30 decreases the valve opening of the flow control valve V10 with an increase in the pressure acquired by the pressure sensor P1.

Preferably, the control device 30 controls the flow control valve V11 based on the pressure acquired by the pressure sensor P3, i.e., the pressure of the hydrogen gas in the section between the third cooler 22C and the third compressor 21C. Preferably, the control device 30 controls the flow control valve V11 such that the pressure acquired by the pressure sensor P3 becomes a target value PT2. The target value PT2 is greater than the target value PT1. When flow control valve V11 opens, the hydrogen gas compressed by third compressor 21C returns to upstream of the third compressor 21C via the return passage L11, raising the pressure of the hydrogen gas between third cooler 22C and third compressor 21C. Preferably, the control device 30 increases the valve opening of the flow control valve V11 with a decrease in the pressure acquired by the pressure sensor P3. Preferably, the control device 30 decreases the valve opening of the flow control valve V11 with an increase in the pressure acquired by the pressure sensor P3.

The control device 30 controls the valve opening of the main flow control valve V5 based on the required hydrogen gas flow rate required for the hydrogen utilizer 20. The control device 30 communicates with the hydrogen utilizer 20 and acquires the required hydrogen gas flow rate set by the hydrogen utilizer 20. In some cases, an operator may manually enter the required hydrogen gas flow rate in the control device 30 based on an operating state of the hydrogen utilizer 20. The control device 30 controls the main flow control valve V5 such that the hydrogen gas flow rate acquired by the flow sensor F2 (i.e., the flow rate at the downstream end of the main passage L6) becomes the required hydrogen gas flow rate.

The pressure in a section between the compressor 21 and the main flow control valve V5 in the main passage L6 is set as a downstream pressure. In the present embodiment, the downstream pressure is a pressure in a section between the third compressor 21C and the main flow control valve V5, and acquired by the pressure sensor P4. The pressure in a section between the gas-liquid separator 5 and the compressor 21 in the main passage L6 is set as an upstream pressure. In the present embodiment, the upstream pressure is a pressure in a section between the second gas-liquid separator 5B and the second compressor 21B, and acquired by the pressure sensor P2.

The control device 30 opens the inflow control valve V8 when the downstream pressure is equal to or greater than a first threshold value PT5, and closes the inflow control valve V8 when the downstream pressure is less than the first threshold value PT5. When the inflow control valve V8 is opened, the hydrogen gas flows from a section between the fourth cooler 22D and the main flow control valve V5 in the main passage L6 to the hydrogen gas holder 6 via the first connecting passage L8. This results in a decrease in the pressure of the hydrogen gas in the section between the fourth cooler 22D and the main flow control valve V5 in the main passage L6.

The control device 30 opens the return flow control valve V9 when the upstream pressure is less than a second threshold value PT6, and closes the return flow control valve V9 when the upstream pressure is equal to or greater than the second threshold value PT6. The second threshold value PT6 is lower than the first threshold value PT5. Furthermore, the second threshold value PT6 is set to be higher than the target value PT1 and lower than the target value PT2. When the return flow control valve V9 opens, the hydrogen gas flows from the hydrogen gas holder 6 to the section between the second gas-liquid separator 5B and the second compressor 21B in the main passage L6 via the second connecting passage L9. This results in an increase in the pressure of hydrogen gas in the section between the second gas-liquid separator 5B and the second compressor 21B in the main passage L6.

The control device 30 opens the inflow control valve V8 when the pressure acquired by the pressure sensor P4, i.e., the downstream pressure in the main passage L6, is equal to or greater than the first threshold value, whereas the control device 30 closes the inflow control valve V8 when the downstream pressure in the main passage L6 is less than the first threshold value. This configuration prevents the downstream pressure in the main passage L6 is suppressed from rising above the first threshold value PT5.

The control device 30 opens the return flow control valve V9 when the pressure acquired by the pressure sensor P2, i.e., the upstream pressure in the main passage L6, is less than the second threshold value, whereas the control device 30 closes the return flow control valve V9 when the upstream pressure in the main passage L6 is equal to or greater than the second threshold value. This configuration prevents the upstream pressure in the main passage L6 from dropping below the second threshold value PT6.

The control device 30 controls the flow rate of the hydrogen carrier gas flowing through the outlets of the first vaporizer 3A and second vaporizer 3B. The control device 30 adjusts an amount of heat for heating the hydrogen carrier supplied to each of the first vaporizer 3A and second vaporizer 3B to thereby regulate the flow rate of the hydrogen carrier gas flowing through the outlet thereof. The liquid level of the hydrogen carrier in the drum 11 of the first vaporizer 3A and the liquid level of the hydrogen carrier in the drum 11 of the second vaporizer 3B are each maintained at a constant level.

The control device 30 controls the flow control valve V1 based on the liquid level of the hydrogen carrier in the drum 11 of the first vaporizer 3A acquired by the level sensor LV1. Preferably, the control device 30 controls the flow control valve V1 such that the liquid level acquired by the level sensor LV1 becomes a predetermined value. As a result, the liquid level of the liquid hydrogen carrier in the drum 11 of the first vaporizer 3A is maintained constant, regardless of a vaporization amount of the liquid hydrogen carrier.

Similarly, the control device 30 controls the flow control valve V2 based on the liquid level of the hydrogen carrier in the drum 11 of the second vaporizer 3B acquired by the level sensor LV2. Preferably, the control device 30 controls the flow control valve V2 such that the liquid level of the hydrogen carrier acquired by the level sensor LV2 becomes a predetermined value. As a result, the liquid level of the liquid hydrogen carrier in the drum 11 of the second vaporizer 3B is maintained constant, regardless of a vaporization rate of the liquid hydrogen carrier. In this way, the liquid levels of the hydrogen carrier in the first vaporizer 3A and the second vaporizer 3B are controlled to be constant, which enables the vaporization amount of the hydrogen carrier to be adjusted according to the amount of heat for heating the hydrogen carrier.

Preferably, the control device 30 controls the vaporizer 3 to regulate the flow rate of vaporized hydrogen carrier flowing through the outlet thereof based on the required hydrogen gas flow rate. The vaporizer 3 includes the first vaporizer 3A and the second vaporizer 3B. Thus, the flow rate of the vaporized hydrogen carrier flowing through the outlet of the vaporizer 3 is acquired by the flow sensor F1 as the sum of the flow rate of the vaporized hydrogen carrier flowing through the outlet of the first vaporizer 3A and the flow rate of the vaporized hydrogen carrier flowing through the outlet of the second vaporizer 3B. Preferably, the control device 30 controls the vaporizer 3 to regulate the flow rate of the vaporized hydrogen carrier flowing through the outlet of the vaporizer 3 based on, in addition to the required hydrogen gas flow rate, the pressure in the hydrogen gas holder 6 as well.

The control device 30 controls the vaporizer 3 such that the flow rate of vaporized hydrogen carrier flowing through the outlet of the vaporizer 3 increases with an increase in the required hydrogen gas flow rate, and such that the flow rate of vaporized hydrogen carrier flowing through the outlet of the vaporizer 3 decreases with an increase in the pressure in the hydrogen gas holder 6.

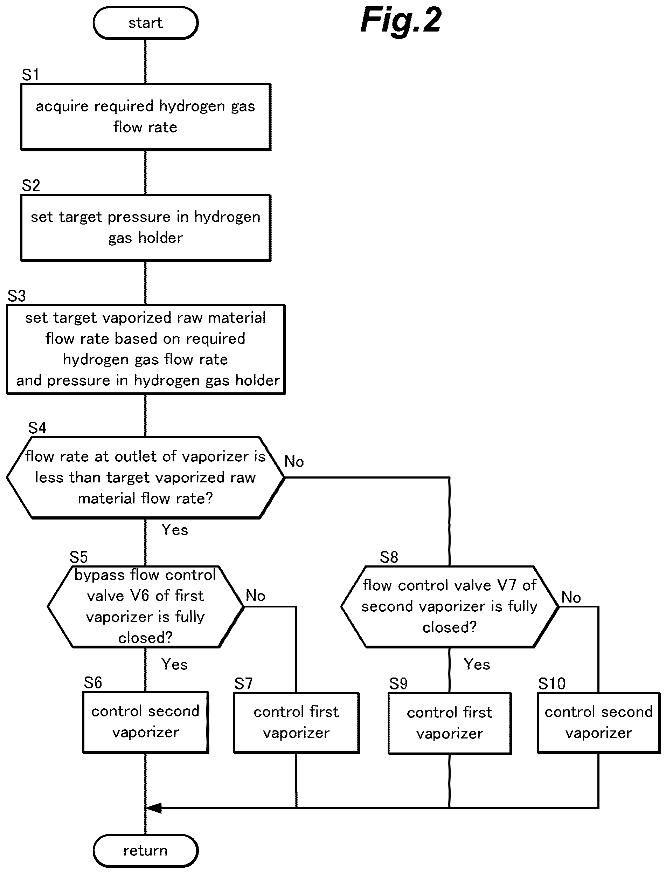

Preferably, the control device 30 controls the vaporizer 3 as shown in a flow chart of Figure 2. The control device 30 first communicates with the hydrogen utilizer 20 and acquires the required hydrogen gas flow rate for the hydrogen utilizer 20 (S1). Next, the control device 30 sets a target pressure PT7 in the hydrogen gas holder 6 based on the required hydrogen gas flow rate (S2). The control device 30 lowers the target pressure PT7 with an increase in the required hydrogen gas flow rate.

Next, the control device 30 sets a target vaporized raw material flow rate, which is a target flow rate at the outlet of the vaporizer 3, based on the required hydrogen gas flow rate and the pressure in the hydrogen gas holder 6 acquired by the pressure sensor P5 (S3). The control device 30 may calculate the target vaporized raw material flow rate by multiplying the required hydrogen gas flow rate by a coefficient. In this case, the control device 30 may change the coefficient based on the pressure in the hydrogen gas holder 6. The control device 30 may decrease the coefficient with an increase in the value acquired by subtracting the target pressure PT7 in the hydrogen gas holder 6 from the measured pressure in the hydrogen gas holder 6. Also, the control device 30 may increase the coefficient with a decrease in the value acquired by subtracting the target pressure PT7 in the hydrogen gas holder 6 from the measured pressure of the hydrogen gas holder 6. In other cases, the control device 30 may, by using a map that defines a relationship between the required hydrogen gas flow rate, the pressure in the hydrogen gas holder 6, and the target vaporized raw material flow rate, set the target vaporized raw material flow rate based on the required hydrogen gas flow rate and the pressure in the hydrogen gas holder 6.

Next, the control device 30 determines whether the flow rate at the outlet of the vaporizer 3 acquired by the flow sensor F1 is less than the target vaporized raw material flow rate (S4). When the flow rate at the outlet of the vaporizer 3 is less than the target vaporized raw material flow rate (Yes in S4), the control device 30 determines whether or not the bypass flow control valve V6 of the first vaporizer 3A is fully closed (S5).
When the bypass flow control valve V6 is fully closed, the entire mixed gas serving as a heat source is supplied to the first vaporizer 3A. Thus, it is not possible to increase the amount of heat supplied to the first vaporizer 3A by controlling the bypass flow control valve V6.

When the bypass flow control valve V6 is fully closed (Yes in S5), the control device 30 controls the flow control valve V7 of the second vaporizer 3B such that the flow rate at the outlet of the vaporizer 3 acquired by the flow sensor F1 becomes the target vaporized raw material flow rate (S6). The amount of the heat source supplied to the second vaporizer 3B increases with an increase in the valve opening of the flow control valve V7. This results in an increase in the amount of the hydrogen carrier vaporized in the second vaporizer 3B, and an increase in the flow rate at the outlet of the vaporizer 3 acquired by the flow sensor F1.

When the bypass flow control valve V6 is not fully closed (No in S5), the control device 30 controls the bypass flow control valve V6 of the first vaporizer 3A such that the flow rate at the outlet of the vaporizer 3 acquired by the flow sensor F1 becomes the target vaporized raw material flow rate (S7). The amount of the heat source supplied to the first vaporizer 3A increases with an increase in the valve opening of the bypass flow control valve V6. This results in an increase in the amount of the hydrogen carrier vaporized in the first vaporizer 3A, and an increase in the flow rate at the outlet of the vaporizer 3 acquired by the flow sensor F1.

When the flow rate at the outlet of the vaporizer 3 is not less than the target vaporized raw material flow rate (No in S4), the control device 30 determines whether or not the flow control valve V7 of the second vaporizer 3B is fully closed (S8).
When the flow control valve V7 is fully closed, it is not possible to further decrease the amount of heat supplied to the second vaporizer 3B by controlling the flow control valve V7.

When the flow control valve V7 is fully closed (Yes in S8), the control device 30 controls the bypass flow control valve V6 of the first vaporizer 3A such that the flow rate at the outlet of the vaporizer 3 acquired by the flow sensor F1 becomes the target vaporized raw material flow rate (S9).

When flow control valve V7 is not fully closed (No in S8), the control device 30 controls the flow control valve V7 of the second vaporizer 3B such that the flow rate at the outlet of the vaporizer 3 acquired by the flow sensor F1 becomes the target vaporized raw material flow rate (S10).

A method of operating the hydrogen supply system 1 will be described below based on the control procedure executed by the control device 30 described above. The method of operating the hydrogen supply system 1 includes the step of regulating the flow rate of hydrogen carrier in gaseous form flowing through the outlet of the vaporizer 3 to thereby regulate the flow rate of hydrogen flowing through the outlet of the dehydrogenation reactor 4. The method of operating the hydrogen supply system 1 further includes the steps of: controlling the valve opening of the main flow control valve V5 based on the required hydrogen gas flow rate for the hydrogen utilizer 20; and controlling the vaporizer 3 to regulate the flow rate of the vaporized hydrogen carrier flowing through the outlet of the vaporizer 3 based on the required hydrogen gas flow rate and the pressure in the hydrogen gas holder 6.

The above hydrogen supply system 1 enables quick regulation of the flow rate of vaporized hydrogen carrier provided to the dehydrogenation reactor 4 by controlling the flow rate of the vaporized hydrogen carrier flowing through the outlet of the vaporizer 3. This enables a quick change in the amount of hydrogen gas generated in the dehydrogenation reactor 4, which means that this system provides a hydrogen generation system which enables a quick change in the amount of hydrogen gas to be supplied.

The hydrogen supply system 1 enables quick regulation of the flow rate of the vaporized hydrogen carrier flowing through the outlet of the vaporizer 3 by adjusting the amount of heat for heating the hydrogen carrier in the vaporizer 3. The amount of heat for heating the hydrogen carrier in the vaporizer 3 can be adjusted by changing an amount of a heat source supplied to the vaporizer 3.

In the hydrogen supply system 1, the hydrogen carrier is vaporized using the first vaporizer 3A and the second vaporizer 3B with their heat sources that are different from each other. Thus, even when that only an insufficient amount of heat is provided from one of the first vaporizer and the second vaporizer, the other of the first vaporizer 3A and the second vaporizer 3B can be used to quickly vaporize the hydrogen carrier.

In the hydrogen supply system 1, a hydrogen gas holder 6 is provided downstream of the gas-liquid separator 5 in the main passage L6. Thus, this enables a quick change in an amount of hydrogen gas to be supplied according to changes in the required hydrogen gas flow rate. In addition, the hydrogen gas holder 6 is provided in a passage branching from the main passage L6, which enables the hydrogen gas holder 6 to be made small. In particular, the hydrogen gas holder 6 is arranged in parallel with the second compressor 21B and the third compressor 21C, which enables the hydrogen gas holder 6 to be made small.

The control device 30 is configured to set a target vaporized raw material flow rate taking into account the pressure in the hydrogen gas holder 60, in addition to the required hydrogen gas flow rate, and control the vaporizer 3 based on the target vaporized raw material flow rate, which enables an appropriate change in the amount of hydrogen gas to be supplied according to the required hydrogen gas flow rate. When the pressure in the hydrogen gas holder 6 is high, hydrogen gas is enabled to be supplied from the hydrogen gas holder 6, which enables the reduction in the amount of hydrogen gas generated in the dehydrogenation reactor 4.

The above system may be configured to decrease the coefficient, which is used to calculate the target vaporized raw material flow rate, with an increase in a reference value obtained by subtracting a target pressure PT7 in the hydrogen gas holder 6 from the pressure in the hydrogen gas holder 6. Since the higher the pressure in the hydrogen gas holder 6 relative to the target pressure PT7 is, the lower the target vaporized raw material flow rate becomes, the return flow control valve V9 opens in order to maintain the upstream pressure, causing the pressure in the hydrogen gas holder 6 to become close to the target pressure PT7. In addition, since the lower the pressure in the hydrogen gas holder 6 relative to the target pressure PT7 is, the greater the target vaporized raw material flow rate becomes, the inflow control valve V8 opens in order to maintain the downstream pressure, causing the pressure in the hydrogen gas holder 6 to become close to the target pressure PT7. A rapid increase in the required hydrogen gas flow rate causes the target pressure PT7 to decrease with an increase in the required hydrogen gas flow rate, causing the pressure in the hydrogen gas holder 6 to become close to the target pressure PT7, which prevents the target vaporized raw material flow rate from increasing rapidly. As a result, the flow rate at the outlet of the vaporizer 3 (the target vaporized raw material flow rate) is prevented from overshooting.

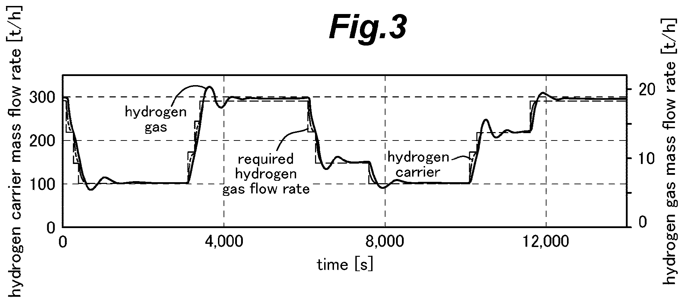

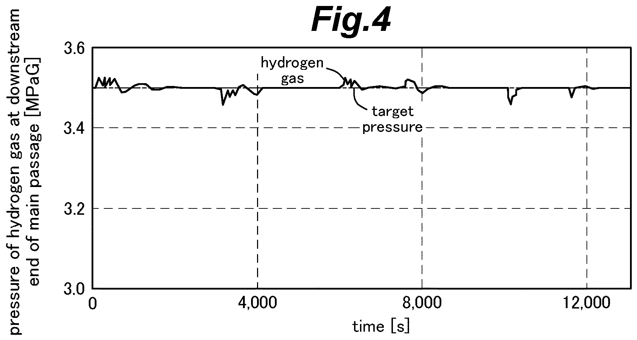

Figure 3 is a graph showing a mass flow rate [t/h] of hydrogen carrier at the outlet of the vaporizer 3 and a mass flow rate [t/h] of hydrogen gas at the downstream end of the main passage L6, relative to the required hydrogen gas flow rate [t/h]. Figure 4 is a graph showing a pressure [MPaG] of hydrogen gas at the downstream end of the main passage L6 and its target value [MPaG], relative to the required hydrogen gas flow rate [t/h]. The change in the required hydrogen gas flow rate [t/h] in Figure 4 is the same as that in Figure 3. Figures 3 and 4 show results obtained by a simulation using methylcyclohexane as the hydrogen carrier. The mass flow rate of the hydrogen carrier at the outlet of the vaporizer 3 is acquired by the flow sensor F1, and the mass flow rate of the hydrogen gas at the downstream end of the main passage L6 is acquired by the flow sensor F2. Results shown in Figure 3 demonstrate that the system enabled the mass flow rate of hydrogen carrier at the outlet of the vaporizer 3 and the mass flow rate of hydrogen gas at the downstream end of main passage L6 to be changed rapidly in response to changes in the required hydrogen gas flow rate. Results shown in Figure 4 demonstrate that the system enabled the pressure of the hydrogen gas at the downstream end of the main passage L6 to be generally consistent with the target value even when the required hydrogen gas flow rate changed.

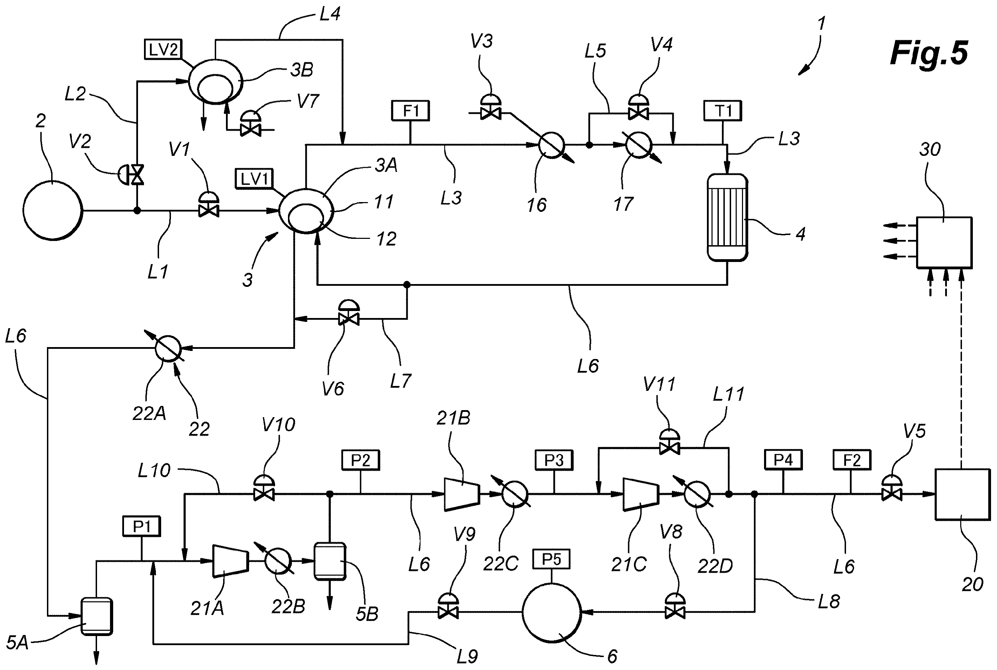

As shown in Figure 5, a hydrogen supply system 1 according to a variant of the first embodiment may be configured such that a second connecting passage L9 is connected to a section between the first gas-liquid separator 5A and the first compressor 21A in the main passage L6. In other cases, the second connecting passage L9 may be connected to a section between the third cooler 22C and the third compressor 21C in the main passage L6.

### <Second Embodiment>

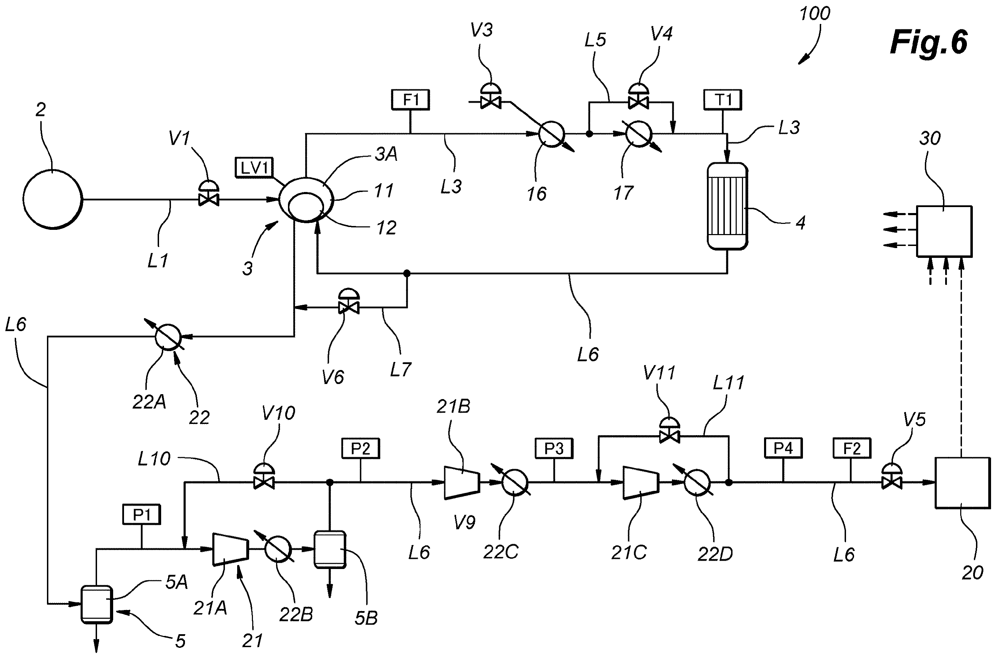

As shown in Figure 6, a hydrogen supply system 100 according to a second embodiment of the present invention is different from the hydrogen supply system 1 of the first embodiment, in that the hydrogen supply system 100 does not include the hydrogen gas holder 6, the second vaporizer 3B, and their related elements. Parts in the hydrogen supply system 100 with the same reference numerals as those in the hydrogen supply system 1 have the same configurations and functions as the hydrogen supply system 1.

The control device 30 of the hydrogen supply system 100 controls the main flow control valve V5 such that the gas flow rate of hydrogen at the downstream end of the main passage L6, acquired by the flow sensor F2, becomes the required hydrogen gas flow rate for the hydrogen utilizer 20. The control device 30 sets the target vaporized raw material flow rate based on the pressure of hydrogen gas at the downstream end of the main passage L6 acquired by the pressure sensor P4, and controls the bypass flow control valve V6 such that the flow rate of vaporized hydrogen carrier flowing through the outlet of the vaporizer 3 acquired by the flow sensor F1 becomes the target vaporized raw material flow rate. The target vaporized raw material flow rate is preferably set to increase with a decrease in the pressure of hydrogen gas at the downstream end of the main passage L6.

The present invention has been described in terms of specific embodiments, but is not limited by such embodiments, and can be embodied with various modifications. For example, one of the first heating device 16 and the second heating device 17 may be omitted from the system. In some embodiments, the second gas-liquid separator 5B may be omitted. In other embodiments, one or two of the first to third compressors 21A to 21C may be omitted from the system. In this case, the hydrogen gas holder 6 may be connected in parallel with at least one compressor 21 provided in the main passage L6. In other cases, one or two of the second to fourth coolers 22B to 22D may be omitted.

### GLOSSARY

- 1: hydrogen supply system
- 3: vaporizer
- 3A: first vaporizer
- 3B: second vaporizer
- 4: dehydrogenation reactor
- 5: gas-liquid separator
- 5A: first gas-liquid separator
- 5B: second gas-liquid separator
- 20: hydrogen utilizer
- 21: compressor
- 21A: first compressor
- 21B: second compressor
- 21C: third compressor
- 30: control device
- F1, F2: flow sensor
- L6: main passage
- L7: bypass passage
- L8: first connecting passage
- L9: second connecting passage
- LV1: level sensor
- LV2: level sensor
- P1-P5: pressure sensor
- V5: main flow control valve
- V6: bypass flow control valve
- V8: inflow control valve
- V9: return flow control valve

## Claims

1. A hydrogen supply system comprising:
a vaporizer for vaporizing a hydrogen carrier in liquid form;
a dehydrogenation reactor for generating hydrogen from the vaporized hydrogen carrier provided from the vaporizer through a dehydrogenation reaction; and
a control device for controlling a flow rate of the vaporized hydrogen carrier flowing through an outlet of the vaporizer.

2. The hydrogen supply system as claimed in claim 1, wherein the control device adjusts an amount of heat for heating the hydrogen carrier to thereby regulate the flow rate of the vaporized hydrogen carrier flowing through the outlet of the vaporizer.

3. The hydrogen supply system as claimed in claim 2, wherein the vaporizer comprises a first vaporizer and a second vaporizer having their heat sources that are different from each other.

4. The hydrogen supply system as claimed in claim 3, further comprising:
a main passage connected to an outlet of the dehydrogenation reactor and passing through the first vaporizer;
a bypass passage connected to the main passage and bypassing the first vaporizer; and
a first flow control valve provided in at least one of the main passage and the bypass passage,
wherein the first vaporizer uses a fluid flowing out from the outlet of the dehydrogenation reactor as a heat source.

5. The hydrogen supply system as claimed in claim 3, wherein the second vaporizer is supplied with a heat source for heating the dehydrogenation reactor.

6. The hydrogen supply system as claimed in claim 2, further comprising:
a second flow control valve for controlling the flow rate of the hydrogen carrier in liquid form supplied to the vaporizer; and
a level sensor for detecting a liquid level of the hydrogen carrier in the vaporizer, and
wherein the second flow control valve is controlled such that the liquid level of the hydrogen carrier in the vaporizer is maintained at a constant level.

7. A method for operating a hydrogen supply system, wherein the hydrogen supply system comprises:
a vaporizer for vaporizing a hydrogen carrier in liquid form; and
a dehydrogenation reactor for generating hydrogen from the vaporized hydrogen carrier provided from the vaporizer through a dehydrogenation reaction,
wherein the method includes regulating a flow rate of the vaporized hydrogen carrier flowing through an outlet of the vaporizer to regulate a flow rate of hydrogen flowing through an outlet of the dehydrogenation reactor.

8. A hydrogen supply system comprising:
a dehydrogenation reactor for receiving a hydrogen carrier and generating hydrogen from the hydrogen carrier through a dehydrogenation reaction;
a main passage connected to an outlet of the dehydrogenation reactor;
a gas-liquid separator for separating hydrogen gas from a fluid flowing through the main passage; and
a hydrogen gas holder connected downstream of the gas-liquid separator in the main passage via a first connecting passage branching from the main passage.

9. The hydrogen supply system as claimed in claim 8, further comprising:
a compressor provided in a section between the gas-liquid separator in the main passage and the first connecting passage and configured to compress the hydrogen gas; and
a second connecting passage connecting the hydrogen gas holder to a section between the compressor and the gas-liquid separator in the main passage.

10. The hydrogen supply system as claimed in claim 9, further comprising:
a main flow control valve provided at a downstream end of the main passage and connected to a hydrogen utilizer that utilizes hydrogen;
an inflow control valve provided in the first connecting passage and configured to control a flow rate of the hydrogen gas flowing from the main passage to the hydrogen gas holder; and
a return flow control valve provided in the second connecting passage and configured to control the flow rate of the hydrogen gas flowing from the hydrogen gas holder to the main passage.

11. The hydrogen supply system as claimed in claim 10, further comprising:
a vaporizer for vaporizing the hydrogen carrier in liquid form and providing the vaporized hydrogen carrier to the dehydrogenation reactor; and
a control device for controlling at least the vaporizer and the main flow control valve,
wherein the control device is configured to:
control a valve opening of the main flow control valve based on a required hydrogen gas flow rate for the hydrogen utilizer, and
control the vaporizer to regulate the flow rate of the vaporized hydrogen carrier flowing through an outlet of the vaporizer based on the required hydrogen gas flow rate and a pressure in the hydrogen gas holder.

12. The hydrogen supply system as claimed in claim 11, wherein the control device is configured to control the vaporizer such that the flow rate of the vaporized hydrogen carrier flowing through the outlet of the vaporizer increases with an increase in the required hydrogen gas flow rate, and such that the flow rate of the hydrogen carrier decreases with an increase in the pressure in the hydrogen gas holder.

13. The hydrogen supply system as claimed in claim 12, wherein the control device is configured to:
calculate a target vaporized raw material flow rate by multiplying the required hydrogen gas flow rate by a coefficient;
control the vaporizer such that the flow rate of the vaporized hydrogen carrier flowing through the outlet of the vaporizer becomes the target vaporized raw material flow rate; and
change the coefficient based on the pressure in the hydrogen gas holder.

14. The hydrogen supply system as claimed in claim 12, wherein the control device is configured to:
open the inflow control valve when a downstream pressure, the downstream pressure being a pressure in a section between the compressor and the main flow control valve in the main passage, is equal to or greater than a first threshold value;
close the inflow control valve when the downstream pressure is less than the first threshold value;
open the return flow control valve when an upstream pressure, the upstream pressure being a pressure in a section between the gas-liquid separator and the compressor in the main passage, is less than a second threshold value;
close the return flow control valve when the upstream pressure is equal to or greater than the second threshold value;
calculate a target vaporized raw material flow rate by multiplying the required hydrogen gas flow rate by a coefficient;
control the vaporizer such that the flow rate of the vaporized hydrogen carrier flowing through the outlet of the vaporizer becomes the target vaporized raw material flow rate;
decrease the coefficient with a decrease in a reference value, the reference value being obtained by subtracting a target pressure in the hydrogen gas holder from the pressure in the hydrogen gas holder; and
decrease the target pressure with an increase in the required hydrogen gas flow rate.

15. The hydrogen supply system as claimed in claim 11, further comprising a flow sensor for measuring the flow rate of the hydrogen gas flowing at the downstream end of the main passage, and
wherein the control device controls the main flow control valve based on the required hydrogen gas flow rate and the measured flow rate of the hydrogen gas obtained by the flow sensor.

16. A method for operating a hydrogen supply system, wherein the hydrogen supply system comprises:
a vaporizer for vaporizing a hydrogen carrier in liquid form;
a dehydrogenation reactor for generating hydrogen from the vaporized hydrogen carrier provided from the vaporizer through a dehydrogenation reaction;
a main passage connected to an outlet of the dehydrogenation reactor;
a gas-liquid separator provided downstream of the vaporizer in the main passage and configured to separate hydrogen gas from a fluid flowing through the main passage;
a compressor provided downstream of the gas-liquid separator in the main passage and configured to compress the hydrogen gas;
a main flow control valve provided at a downstream end of the main passage and connected to a hydrogen utilizer that utilizes hydrogen;
a first connecting passage connected to a section between the compressor and the main flow control valve in the main passage;
a second connecting passage connected to a section between the gas-liquid separator and the compressor in the main passage;
a hydrogen gas holder connected to the first connecting passage and the second connecting passage;
an inflow control valve provided in the first connecting passage and configured to control a flow rate of the hydrogen gas flowing from the main passage to the hydrogen gas holder; and
a return flow control valve provided in the second connecting passage and configured to control the flow rate of the hydrogen gas flowing from the hydrogen gas holder to the main passage,
wherein the method comprising:
controlling a valve opening of the main flow control valve based on a required hydrogen gas flow rate for the hydrogen utilizer; and
controlling the vaporizer to regulate the flow rate of the vaporized hydrogen carrier flowing through an outlet of the vaporizer based on the required hydrogen gas flow rate and a pressure in the hydrogen gas holder.
